# EUROPEAN PATENT APPLICATION

(11) **EP 2 621 186 A2**
(43) Date of publication of application: **31.07.2013**
(21) Application number: 13152357.3
(22) Date of filing: 23.01.2013
(51) Int. Cl.: H04N 21/422

(54) **Remote control system and control terminal**

(30) Priority: 25.01.2012 JP 2012013418
(71) Applicant: Funai Electric Co., Ltd., Daito-shi, Osaka 574-0013 (JP)
(72) Inventor: Higashi, Norihiro, Daito-shi, Osaka 574-0013 (JP); Nishimura, Keita, Daito-shi, Osaka 574-0013 (JP); Tsukamoto, Keisuke, Daito-shi, Osaka 574-0013 (JP); Eto, Kentaro, Daito-shi, Osaka 574-0013 (JP); Ishihara, Hidetoshi, Daito-shi, Osaka 574-0013 (JP)
(74) Representative: Grünecker, Kinkeldey, Stockmair & Schwanhäusser

(57) **Abstract**

A remote control system includes a portable terminal, a display device and a control terminal. The portable terminal has a first display component with a first touch panel. The control terminal wirelessly communicates with the portable terminal. The control terminal has a second touch panel that detects a user touch operation, and a wireless transmission component that wirelessly sends coordinate information indicative of a touched position of the user touch operation on the second touch panel to the portable terminal. The portable terminal further has an operation execution component that executes an operation associated with a position on the first touch panel that corresponds to the touched position of the user touch operation on the second touch panel based on the coordinate information, and a first video transmission component that sends image of an execution screen of the operation to the display device through a transmission cable.

## Description

### CROSS-REFERENCE TO RELATED APPLICATIONS

This application claims priority to Japanese Patent Application No. 2012-013418 filed on January 25, 2012. The entire disclosure of Japanese Patent Application No. 2012-013418 is hereby incorporated herein by reference.

### BACKGROUND

### Field of the Invention

The present invention generally relates to a remote control system. More specifically, the present invention relates to a remote control system with a portable terminal and a video display device.

### Background Information

Network systems in which a smartphone and a television receiver (hereinafter referred to as TV receiver) can be connected via an MHL (mobile high-definition link) cable have been known in recent years. With these network systems, the smartphone sends the video it is displaying itself through the MHL cable to the TV receiver, and therefore has the function of displaying video it is displaying itself on the display of the TV receiver. This function allows the user to watch a smartphone video on the display of the TV receiver.

### SUMMARY

However, MHL cables and other such transmission cables are generally not very long. Therefore, it has been discovered that with the above-mentioned network system, when a smartphone is directly operated to give various commands while the user is watching the display on the TV receiver, a problem is that the viewing location of the user is limited by the length of the transmission cable.

On the other hand, with a conventional communication system (see Japanese Laid-Open Patent Application Publication No. 2009-130857, for example), a portable telephone has an infrared communication component for performing low-speed infrared communication with an infrared transmission remote control device of a television set. The portable telephone is operated remotely with the remote control device, and image data stored in the portable telephone is sent by high-speed infrared communication to the television set. With this infrared communication system, the portable telephone can be operated by using a remote control device that performs low-speed infrared communication. Thus, the viewing location of the user is less limited. However, it has been discovered that since the layout of the control buttons and so forth is very different between the remote control device and the portable telephone, it is hard for the user to operate the portable telephone by using the remote control device, and this makes the product less convenient to use.

Furthermore, with a conventional portable telephone cradle (see Japanese Patent No. 4,691,741, for example), a portable telephone can be placed on the portable telephone cradle. The portable telephone cradle communicates with the portable telephone and receives data from a scanner remote control such that the scanner remote control functions as an input means for the portable telephone. The portable telephone cradle also communicates with an AV device and controls this AV device such that the AV device can function as an output means for the portable telephone. The portable telephone cradle can also be used in an emergency information notification system. However, it has been discovered that the problem of inconvenience remains with this portable telephone cradle and emergency information notification system since the user cannot easily operate the portable telephone remotely.

Moreover, with an electronic device (see LiveView™ MN800, main feature [online], Sony Ericsson Mobile Communications, Retrieved from the Internet: <URL : http://www.sonyericsson.co.jp/product/accessories/liveview/>, for example), the electronic device operates a portable telephone by sending a wireless signal conforming to the Bluetooth standard to the portable telephone at the touch operation of a user. However, it has also been discovered that with this electronic device, since the layout of the control buttons and so forth is very different from that of the portable telephone, the problem of inconvenience cannot be solved.

One object of the present disclosure is to provide a remote control system with which the user can easily operate a portable terminal that displays video on a video display device.

In view of the state of the know technology, a remote control system includes a portable terminal, a display device and a control terminal. The portable terminal has a first display component with a first touch panel. The display device is configured to display image from the portable terminal through a transmission cable. The control terminal is configured to wirelessly communicate with the portable terminal. The control terminal has a second touch panel that is configured to detect a user touch operation, and a wireless transmission component that is configured to wirelessly send coordinate information indicative of a touched position of the user touch operation on the second touch panel to the portable terminal. The portable terminal further has an operation execution component that is configured to execute an operation associated with a position on the first touch panel that corresponds to the touched position of the user touch operation on the second touch panel based on the coordinate information, and a first video transmission component that is configured to send image of an execution screen of the operation to the display device through the transmission cable.

Other objects, features, aspects and advantages of the present disclosure will become apparent to those skilled in the art from the following detailed description, which, taken in conjunction with the annexed drawings, discloses a preferred embodiment of a remote control system.

### BRIEF DESCRIPTION OF THE DRAWINGS

Referring now to the attached drawings which form a part of this original disclosure:

FIG. 1 is a schematic diagram of a remote control system with a TV receiver, a smartphone and a touch pad in accordance with one embodiment;

FIG. 2 is a block diagram of an internal configuration of the TV receiver of the remote control system illustrated in FIG. 1;

FIG. 3 is a block diagram of an internal configuration of the smartphone of the remote control system illustrated in FIG. 1;

FIG. 4 is a block diagram of an internal configuration of the touch pad of the remote control system illustrated in FIG. 1;

FIG. 5A is a schematic diagram of an image displayed on a display component of the smartphone illustrated in FIG. 3;

FIG. 5B is a schematic diagram of an image displayed on a display of the TV receiver illustrated in FIG. 2;

FIG. 6 is a flowchart of a processing procedure during operation of the touch pad in the remote control system illustrated in FIG. 1;

FIG. 7A is a schematic diagram of the display component of the smartphone illustrated in FIG. 3;

FIG. 7B is a schematic diagram of a display component of the touch pad illustrated in FIG. 4;

FIG. 8A is a schematic diagram of a display component of a modified smartphone; and

FIG. 8B is a schematic diagram of a display component of a modified touch pad.

### DETAILED DESCRIPTION OF EMBODIMENTS

A preferred embodiment will now be explained with reference to the drawings. It will be apparent to those skilled in the art from this disclosure that the following descriptions of the embodiment are provided for illustration only and not for the purpose of limiting the invention as defined by the appended claims and their equivalents.

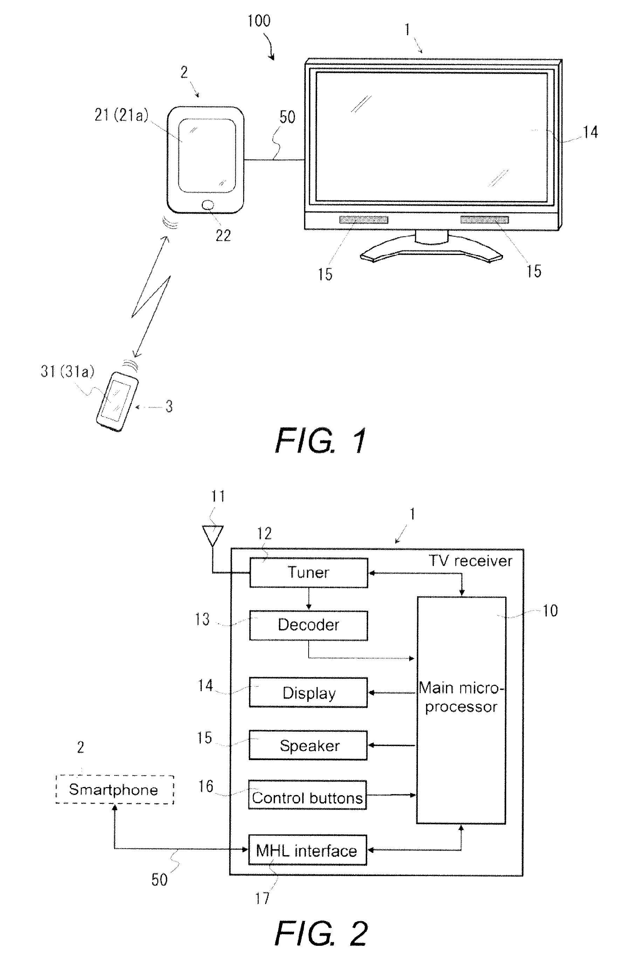

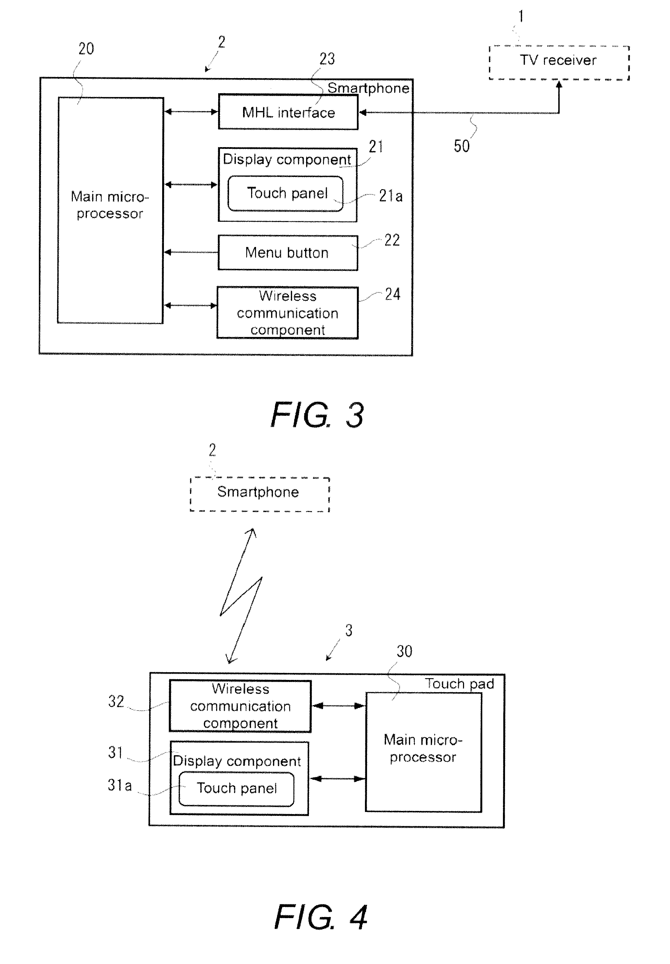

Referring to FIGS. 1 to 4, a remote control system 100 is illustrated in accordance with one embodiment. The remote control system 100 includes a television receiver 1 (e.g., a video display device or display device) (hereinafter referred to as TV receiver), a smartphone 2 (e.g., a portable terminal), and a touch pad 3 (e.g., a control terminal). FIG. 2 is a block diagram illustrating an electrical configuration of the TV receiver 1. FIG. 3 is a block diagram illustrating an electrical configuration of the smartphone 2. FIG. 4 is a block diagram illustrating an electrical configuration of the touch pad 3.

The TV receiver 1 and the smartphone 2 are devices that are compatible with MHL (mobile high-definition link). The TV receiver 1 and the smartphone 2 are connected to each other via an MHL-compatible transmission cable 50 (e.g., a transmission cable) (hereinafter referred to as an MHL cable). The MHL cable 50 has a data line for transferring video and audio signals, a CBUS (control bus) line for transferring control commands, a power line for charging the devices, and so forth.

The smartphone 2 sends a video signal based on the image displayed on a display component 21 (e.g., a first display component or first display means) having a touch panel 21a (e.g., a first touch panel), through the MHL cable 50 to the TV receiver 1. The smartphone 2 is electrically connected to the TV receiver 1 with the MHL cable 50. The TV receiver 1 displays the image based on the video signal received from the smartphone 2 on a display 14. The smartphone 2 and the touch pad 3 are both compatible with Bluetooth, and exchange wireless signals by Bluetooth. The smartphone 2 and the touch pad 3 are wirelessly connected to each other to wirelessly communicate with each other.

As shown in FIG. 2, the TV receiver 1 includes a tuner 12 that is connected to an antenna 11 and receives digital broadcast signals, a decoder 13, the display 14 that displays an image, a pair of speakers 15 (see FIG. 1) that outputs audio, a plurality of control buttons 16, an MHL interface 17, and a main microprocessor 10.

The tuner 12 receives digital broadcast signals for various channels sent out from broadcast stations, through the antenna 11. The decoder 13 subjects the digital broadcast signals received by the tuner 12 to demodulation processing, error correction processing, and so on. The decoder 13 also has a TS (transport stream) conversion circuit (not shown) that separates the required TS from a multiplexed signal, a video decoding circuit (not shown) that subjects each separate TS to decoding processing, an audio decoding circuit (not shown), a data decoding circuit (not shown), and so forth.

The video decoding circuit subjects a TS packet including a video signal to decoding processing, extracts the video signal, and outputs the extracted video signal to the main microprocessor 10. The audio decoding circuit subjects a TS packet including an audio signal to decoding processing, extracts the audio signal, and outputs the extracted audio signal to the main microprocessor 10.

The data decoding circuit subjects a TS packet including SI (service information) data to decoding processing, extracts the SI data, and outputs the extracted SI data to the main microprocessor 10.

The display 14 displays video of a television program received by the tuner 12, or video based on a video signal received from the smartphone 2. The speakers 15 output audio of the television program received by the tuner 12. The control buttons 16 are operated by the user and used to input various commands to the TV receiver 1.

The MHL interface 17 is connected to the MHL cable 50, receives video signals and control commands sent from the smartphone 2 via the MHL cable 50, and transfers these to the main microprocessor 10.

The main microprocessor 10 controls the various components of the TV receiver 1. More specifically, for example, displaying processing is performed in which video based on the video signal received from the smartphone 2 is displayed on the display 14 by using the MHL interface 17. Of course, it will be apparent to those skilled in the art from this disclosure that the TV receiver 1 can further include conventional components provided to conventional television receivers. However, since these components are conventional, the detailed description will be omitted for the sake of brevity.

As shown in FIG. 3, the smartphone 2 includes the display component 21 that displays video, a menu button 22, an MHL interface 23 (e.g., a first video transmission component or first video transmission means), a wireless communication component 24 (e.g., a second video transmission component or second video transmission means), and a main microprocessor 20 (e.g., an operation determination component or operation determination means, an operation execution component or operation execution means).

The display component 21 has the touch panel 21a, which functions as a control key. The touch panel 21a is provided so as to cover the screen of the display component 21, and detects touch operation (e.g., a user touch operation) by a user. Images (hereinafter referred to as icon images) corresponding to control keys used to input various operations and execution keys used to execute applications are displayed on the display component 21. An application execution screen (e.g., an execution screen or an execution result screen) on which an execution is directed by the user is also displayed on the display component 21. The user can input various commands by touching the icon images.

The menu button 22 is operated by the user to direct that the icon images be displayed on the display component 21.

The MHL interface 23 is connected to the MHL cable 50 and sends video signals, audio signals, and control commands through the MHL cable 50 to the TV receiver 1. The wireless communication component 24 exchanges wireless signals with the touch pad 3 by Bluetooth standard.

The main microprocessor 20 controls the various components of the smartphone 2. More specifically, for example, the main microprocessor 20 sends the TV receiver 1 a video signal based on the video displayed on the display component 21, using the MHL interface 23. In particular, the main microprocessor 20 sends the TV receiver 1 the image of the application execution screen displayed on the display component 21. The main microprocessor 20 also receives coordinate information from the touch pad 3, using the wireless communication component 24. The main microprocessor 20 also sends the video displayed on the display component 21 (e.g., a video signal based thereon) to the touch pad 3 by wireless signal, using the wireless communication component 24. In particular, the main microprocessor sends the touch pad 3 the image on the display component 21. The main microprocessor 20 determines a position on the touch panel 21a based on the coordinate information. In particular, the main microprocessor 20 determines that the user has touched a position on the touch panel 21a corresponding to the coordinate information, based on the coordinate information sent from the touch pad 3. In other words, the main microprocessor 20 determines that touch operation (e.g., a user touch operation) has occurred at the position on the touch panel 21a that corresponds to the coordinate information in response to receiving the coordinate information from the touch pad 3. Then, the main microprocessor 20 executes the operation corresponding to the position on the touch panel 21a thus determined to have been touched. In other words, the main microprocessor 20 executes the operation associated with the position on the touched panel 21a that corresponds to the coordinate information. Of course, it will be apparent to those skilled in the art from this disclosure that the smartphone 2 can further include conventional components provided to conventional smartphones. However, since these components are conventional, the detailed description will be omitted for the sake of brevity.

As shown in FIG. 4, the touch pad 3 includes a display component 31 (e.g., a second display component, a display component or second display means) that displays video, a wireless communication component 32 (e.g., a wireless transmission component or wireless transmission means), and a main microprocessor 30 (e.g., a video output component or video output means).

The display component 31 has a touch panel 31a (e.g., a second touch panel or a touch panel) that functions as a control key. The touch panel 31a is provided so as to cover the screen of the display component 31, and detects touch operation by a user. Video based on the video signal sent from the smartphone 2 is displayed on the display component 31. The display component 31 can also be set not to display video based on the video signal sent from the smartphone 2.

The wireless communication component 32 exchanges wireless signals with the smartphone 2 by Bluetooth standard.

The main microprocessor 30 controls the various components of the touch pad 3. More specifically, for example, the main microprocessor 30 receives the video signal sent from the smartphone 2, using the wireless communication component 32, and displays video based on the received video signal on the display component 31. The main microprocessor 30 also sends the smartphone 2 the coordinate information about the position on the touch panel 31a touched by the user, using the wireless communication component 32, when the touch panel 31a has been touched by the user. In particular, the main microprocessor 30 detects the touch operation (e.g., the user touch operation) by a user. Then, the main microprocessor 30 determines the touched position of the touch operation by the user on the touch panel 31a, and produce the coordinate information indicative of the touched position of the touch operation on the touch panel 31a. The coordinate information can indicate the touched position with XY coordinate with respect to an origin, such as left top position of the touch panel 31 a. Of course it will be apparent to those skilled in the art from this disclosure that the coordinate information can indicate the touched position in different manner. Of course, it will be apparent to those skilled in the art from this disclosure that the touch pad 3 can further include conventional components provided to conventional touch pads. However, since these components are conventional, the detailed description will be omitted for the sake of brevity.

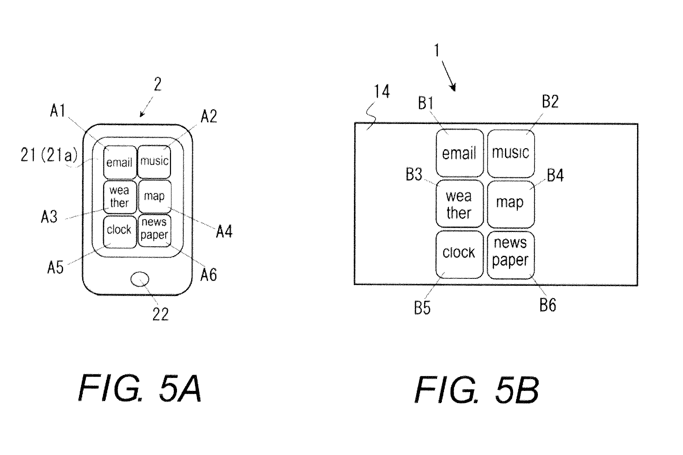

Next, the images displayed on the display component 21 of the smartphone 2, and the images displayed on the display 14 of the TV receiver 1 will be described through reference to FIGS. 5A and 5B. FIG. 5A illustrates the images displayed on the display component 21 of the smartphone 2, while FIG. 5B illustrates the images displayed on the display 14 of the TV receiver 1.

As shown in FIG. 5A, the icon images A1 to A6 are displayed on the display component 21 of the smartphone 2. At this point, the smartphone 2 sends the TV receiver 1 the video signal based on these images. Consequently, as shown in FIG. 5B, the icon images B1 to B6 corresponding to the icon images A1 to A6 displayed on the display component 21 of the smartphone 2 are displayed on the display 14 of the TV receiver 1. Specifically, the same images are displayed on the display 14 of the TV receiver 1 as those on the display component 21 of the smartphone 2.

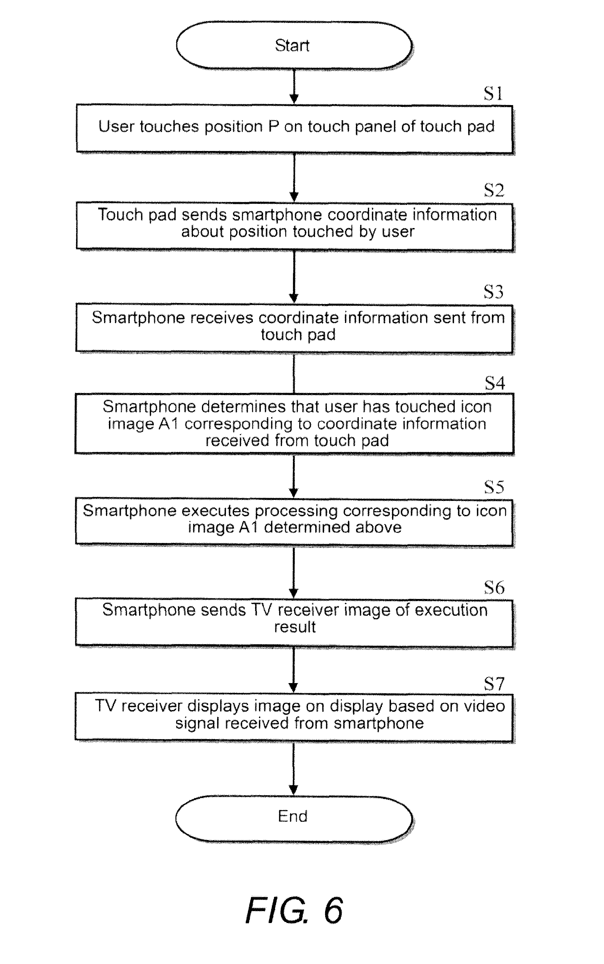

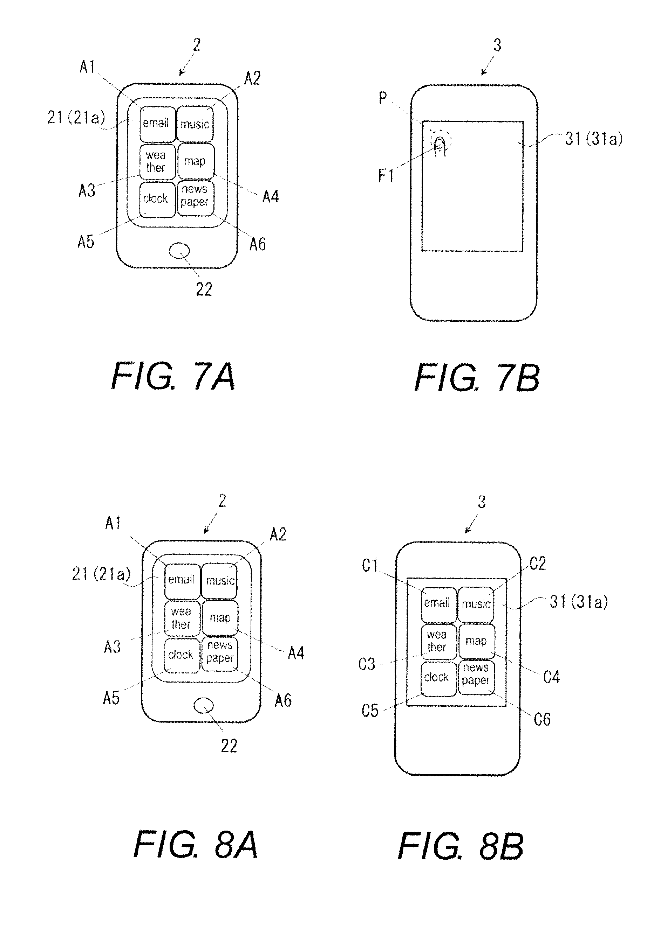

Next, the operation processing of the smartphone 2 using the touch pad 3 in the remote control system 100 will be described through reference to FIGS. 6, 7A and 7B. FIG. 6 is a flowchart illustrating the operation processing of the smartphone 2 using the touch pad 3. FIG. 7A illustrates the display component 21 of the smartphone 2. FIG. 7B illustrates the display component 31 of the touch pad 3. In the illustrated embodiment, no image is displayed on the display component 31 of the touch pad 3.

In step S1 of FIG. 6, while the icon images A1 to A6 are displayed on the display component 21 of the smartphone 2 as shown in FIG. 7A, the user touches a position P on the display component 31 of the touch pad 3 with a finger F1 of the user as shown in FIG. 7B. Consequently, in step S2, the main microprocessor 30 of the touch pad 3 sends the coordinate information about the position P touched with the finger F1 of the user to the smartphone 2 by wireless signal using the wireless communication component 32.

The main microprocessor 20 of the smartphone 2 then uses the wireless communication component 24 to receive the coordinate information sent from the touch pad 3 in step S3, and then determines that the user has touched a position on the touch panel 21a of the smartphone 2 corresponding to the coordinate information received from the touch pad 3 in step S4. More specifically, in the illustrated embodiment, positions on the touch panel 21a of the smartphone 2 are associated with positions on the touch panel 31a of the touch pad 3 in one-to-one correspondence. This correspondence can be stored in the smartphone 2 as a table, for example. Thus, the main microprocessor 20 of the smartphone 2 determines the position on the touch panel 21a based on the coordinate information indicative of the touched position of the touch operation on the touch panel 31 a. In particular, the main microprocessor 20 of the smartphone 2 determines the position on the touch panel 21a that corresponds to the touched position on the touch panel 31a based on the coordinate information. Alternatively, the positions on the touched panel 21a of the smartphone 2 can be associated with the positions on the touched panel 31a of the touch pad 3 in many-to-one correspondence as long as a position on the touched panel 21a of the smartphone 2 can be determined based on the coordinate information. In the illustrated embodiment, as shown in FIGS. 7A and 7B, the icon image A1 is at the position on the touch panel 21a of the smartphone 2 corresponding to the position P on the touch panel 31a of the touch pad 3 touched by the finger F1 of the user. Therefore, the main microprocessor 20 of the smartphone 2 determines that the user has touched the icon image A1.

The main microprocessor 20 of the smartphone 2 then executes the processing corresponding to the icon image A1 in step S5, and then sends an image of the execution result to the TV receiver 1 using the MHL interface 23 in step S6. For example, when the icon image A1 here directs the actuation of an e-mail application, then the main microprocessor 20 of the smartphone 2 executes an e-mail application execution processing (corresponds to the step S5 above), and sends the TV receiver 1 the video after the actuation of the e-mail application (corresponds to the step S6 above).

The main microprocessor 10 of the TV receiver 1 then displays the video (e.g., the execution screen) of the e-mail application on the display 14 based on the video signal received from the smartphone 2 in step S7.

As discussed above, with this remote control system 100, when the user touches the touch panel 31a of the touch pad 3, the touch pad 3 sends the coordinate information about the position touched by the user to the smartphone 2 by the wireless signal. The smartphone 2 executes the operation corresponding to the position on the touch panel 21a of the smartphone 2 determined to have been touched by the user, and then sends the image of the execution result screen through the MHL cable 50 to the TV receiver 1. Therefore, when the user wants to touch a desired position on the touch panel 21a of the smartphone 2, the user touches a position on the touch panel 31a of the touch pad 3 corresponding to this desired position. As a result, the same operation can be executed on the smartphone 2 as when the desired position is directly touched on the touch panel 21a of the smartphone 2. Therefore, even if the location where the user is watching the TV receiver 1 is away from the smartphone 2, the user can use the touch pad 3 to easily operate the smartphone 2 remotely while watching the TV receiver 1 on which the image of the smartphone 2 is displayed.

Also, since the image of the result of executing the application executed by the smartphone 2 is displayed on the display 14 of the TV receiver 1, the user can easily confirm through the display 14 of the TV receiver 1 that the actuation of the desired application has been completed by the smartphone 2.

In the illustrated embodiment, as illustrated in FIG. 7B, no image is displayed on the display component 31 of the touch pad 3. Alternatively, the touch pad 3 (e.g., a modified touch pad) can display an image based on the video signal received from the smartphone 2 (e.g., a modified smartphone) on the display component 31 as illustrated in FIGS. 8A and 8B. FIG. 8A illustrates the display component 21 of the smartphone 2. FIG. 8B illustrates the display component 31 of the modified touch pad 3. An image that is the same as the image of the smartphone 2 as shown in FIG. 7A discussed above is displayed on the display component 21 of the smartphone 2 as shown in FIG. 8A. Thus, this will not be described in detail for the sake of brevity. In the illustrated embodiment, the main microprocessor 20 of the smartphone 2 uses the wireless communication component 24 to send the touch pad 3 a video signal based on the image displayed on the display component 21.

The touch pad 3 displays the image based on the video signal received from the smartphone 2 on the display component 31. Specifically, as shown in FIG. 8B, the icon images C1 to C6 corresponding to the icon images A1 to A6 displayed on the display component 21 of the smartphone 2 are displayed on the display component 31 of the touch pad 3. The user then operates the smartphone 2 by touching the desired icon images C1 to C6 while looking at the icon images C1 to C6.

Since an image that is the same as the image displayed on the display component 21 of the smartphone 2 is displayed on the display component 31 of the touch pad 3, the user can use the touch pad 3 to operate the smartphone 2 even more easily.

The present invention is not limited to the configuration in the above embodiment, and various modifications are possible without departing from the scope of the invention. For instance, in the illustrated embodiment, the TV receiver 1 is illustrated as an example of a display device of the present application. However, this is not the only option. For example, it can be any video display device capable of displaying video received from a portable terminal. Also, in the illustrated embodiment, the smartphone 2 is illustrated as an example of a portable terminal of the present application. However, this is not the only option. For example, it can be any portable terminal that has a touch panel and is capable of receiving coordinate information from a control terminal and capable of sending video to a video display device. Also, in the illustrated embodiment, the touch pad 3 is illustrated as an example of a control terminal of the present application. However, this is not the only option. For example, it can be any control terminal that has a touch panel and is capable of sending coordinate information about a touch position to a portable terminal.

Also, in the illustrated embodiment, the MHL cable 50 is illustrated as an example of a transmission cable. However, this is not the only option. For example, it can be an HDMI cable or other such transmission cable capable of sending video signals.

With the remote control system 100, the remote control system 100 includes the smartphone 2 having the display component 21 equipped with the touch panel 21a that detects the touch operation by a user, the TV receiver 1 that displays video sent through the MHL cable 50 from the smartphone 2, and the touch pad 3 that wirelessly communicates with the smartphone 2. The touch pad 3 has the touch panel 31a that detects the touch operation by the user, and the wireless communication component 32 for sending the coordinate information about the position on the touch panel 31a touched by the user to the smartphone 2 by the wireless signal. The smartphone 2 has the main microprocessor 20 for determining that the user has touched the position on the touch panel 21a corresponding to the coordinate information based on the coordinate information sent from the wireless communication component 32 of the touch pad 3. The main microprocessor 20 executes an operation corresponding to the position on the touch panel 21a determined by the main microprocessor 20 to have been touched by the user. The smartphone 2 has the MHL interface 23 for sending a screen of the result of executing the operation by the main microprocessor 20, through the MHL cable 50 to the TV receiver 1.

With the remote control system 100, the smartphone 2 further has the wireless communication component 24 for sending video displayed on the display component 21 to the touch pad 3 by the wireless signal. The touch pad 3 further has the display component 31 equipped with the touch panel 31a, and the main microprocessor 30 for displaying on the display component 31 the video sent from the wireless communication component 24 of the smartphone 2.

The touch pad 3 has the touch panel 31a that detects the touch operation by a user, and the wireless communication component 32 for sending the coordinate information about the position on the touch panel 31a touched by the user to the smartphone 2 by the wireless signal.

With the touch pad 3, the touch pad 3 further has the display component 31 equipped with the touch panel 31a, and the main microprocessor 30 for displaying on the display component 31 the video sent from the smartphone 2.

With the remote control system 100, when the user touches the touch panel 31a of the touch pad 3, the touch pad 3 sends the coordinate information about the position touched by the user to the smartphone 2. The smartphone 2 executes an operation corresponding to the position on the touch panel 21a determined to have been touched by the user based on the coordinate information sent from the touch pad 3. The smartphone 2 sends a screen of the execution result through the MHL cable 50 to the TV receiver 1, Therefore, when the user wants to touch a desired position on the touch panel 21a of the smartphone 2, the user touches a position on the touch panel 31a of the touch pad 3 corresponding to this desired position. As a result, the same operation is executed on the smartphone 2 as when the desired position is directly touched on the touch panel 21a. Therefore, even if the location where the user is watching the TV receiver 1 is away from the smartphone 2, the user can use the touch pad 3 to easily operate the smartphone 2 remotely while watching the TV receiver 1 on which the image of the smartphone 2 is displayed.

The same effects as mentioned above can be obtained by using the touch pad 3 in the remote control system 100.

Accordingly, with the remote control system 100, remote control of the smartphone 2 can be easily accomplished using the touch pad 3 in the operation of the smartphone 2 that displays video on the TV receiver connected by the MHL cable 50.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A remote control system comprising:
a portable terminal having a first display component with a first touch panel;
a display device configured to display image from the portable terminal through a transmission cable; and
a control terminal configured to wirelessly communicate with the portable terminal, the control terminal having
a second touch panel that is configured to detect a user touch operation, and
a wireless transmission component that is configured to wirelessly send coordinate information indicative of a touched position of the user touch operation on the second touch panel to the portable terminal, the portable terminal further having
an operation execution component that is configured to execute an operation associated with a position on the first touch panel that corresponds to the touched position of the user touch operation on the second touch panel based on the coordinate information, and
a first video transmission component that is configured to send image of an execution screen of the operation to the display device through the transmission cable.

2. The remote control system according to claim 1, wherein
the portable terminal further has a second video transmission component configured to wirelessly send image on the first display component to the control terminal, and
the control terminal further has
a second display component including the second touch panel, and
a video output component configured to display on the second display component the image sent from the second video transmission component of the portable terminal.

3. The remote control system according to claim 1, wherein
the portable terminal further has an operation determination component that is configured to determine that a user touch operation has occurred at the position on the first touch panel that corresponds to the touched position of the user touch operation on the second touch panel in response to receiving the coordinate information from the wireless transmission component of the control terminal.

4. The remote control system according to claim 3, wherein
the operation determination component of the portable terminal is configured to determine the position on the first touch panel based on the coordinate information.

5. The remote control system according to claim 3, wherein
the operation determination component of the portable terminal is configured to determine the position on the first touch panel based on the coordinate information, with the position on the first touch panel being associated with the touched position of the user touch operation on the second touch panel in one-to-one correspondence.

6. The remote control system according to claim 3, wherein
the operation execution component of the portable terminal is further configured to execute the operation associated with the position on the first touch panel that has been determined by the operation determination component of the portable terminal.

7. The remote control system according to claim 1, wherein
the first touch panel of the portable terminal is further configured to detect a user touch operation.

8. The remote control system according to claim 1, wherein
the display device is electrically connected to the portable terminal with the transmission cable.

9. A control terminal comprising:
a touch panel configured to detect a user touch operation; and
a wireless transmission component configured to wirelessly send coordinate information indicative of a touched position of the user touch operation on the touch panel to a portable terminal.

10. The control terminal according to claim 9, further comprising:
a display component including the touch panel, and
a video output component configured to display image from the portable terminal on the display component.
